# EUROPÄISCHE PATENTSCHRIFT

(11) **EP 0 965 162 B1**
(45) Veröffentlichungstag und Bekanntmachung des Hinweises auf die Patenterteilung: **30.05.2001**
(21) Anmeldenummer: 98914807.7
(22) Anmeldetag: 23.02.1998
(51) Int. Cl.: H02K 5/24, F16F 15/32

(54) **LAGERSCHILD, INSBESONDERE FÜR ELEKTRISCHE MASCHINEN**
BASE PLATE, PARTICULARLY FOR ELECTRICAL MACHINES
FLASQUE, NOTAMMENT POUR MACHINES ELECTRIQUES

(30) Priorität: 06.03.1997 DE 19709222
(43) Veröffentlichungstag der Anmeldung: 22.12.1999
(73) Patentinhaber: SIEMENS AKTIENGESELLSCHAFT, 80333 München (DE)
(72) Erfinder: EULE, Andreas-Alexander, D-90425 Nürnberg (DE)
(86) Internationale Anmeldenummer: DE9800535
(87) Internationale Veröffentlichungsnummer: WO9839834

(56) Entgegenhaltungen:
- PATENT ABSTRACTS OF JAPAN vol. 096, no. 008, 30.August 1996 & JP 08 107655 A (MATSUSHITA ELECTRIC IND CO LTD), 23.April 1996,
- PATENT ABSTRACTS OF JAPAN vol. 015, no. 032 (M-1073), 25.Januar 1991 & JP 02 271138 A (TOSHIBA CORP), 6.November 1990,
- PATENT ABSTRACTS OF JAPAN vol. 006, no. 095 (E-110), 3.Juni 1982 & JP 57 028542 A (MATSUSHITA ELECTRIC IND CO LTD), 16.Februar 1982,

## Beschreibung

Die Erfindung betrifft ein Lagerschild, insbesondere für elektrische Maschinen.

Elektrische Maschinen und das jeweilige Fundament weisen gemeinsame Systemeigenfrequenzen auf.

Elektrische Maschinen-Fundament-Systeme, deren Systemeigenfrequenzen den Anregungsfrequenzen aus Drehfrequenz und/oder vorzugsweise bei 2-poligen Masschinen der doppelten Netzfrequenz entsprechen, führen zu erheblichen Schwingungsproblemen. Diese Schwingungsprobleme äußern sich in zu hohen Materialbeanspruchungen, die ,falls die zulässigen Spannungswerte des Werkstoffs überschritten werden zu Werkstoffschädigungen führen. Außerdem treten bei Überschreitung gewisser Verformungsgrenzen, die z. B. bei Rotorsschwingungen von Elektromotoren zu einer Überbrückung des Spiels zwischen Rotor und Gehäuse führen, massive Funktionsbeeinträchtigungen ein. Motoren, die bei Abnahmeprüfungen, bei denen "harte" Fundamente vorhanden sind, keine schwingungstechnischen Beanstandungen aufweisen, können bei Kunden mit "weichen" Fundamenten dennoch zu Schwingungsproblemen führen. Die Schwingungsanforderungen der Normen und der Kunden können bisher nur durch konstruktiv und zeitlich aufwendige Verfahren eingehalten werden. wie z.B. durch Änderungen des Fundaments oder des Läufers (Wellendurchmesser).

Eine weitere Möglichkeit diesen Anforderungen gerecht zu werden besteht in der Veränderung der Lagerung, z.B. durch Verändern des Lagerabstandes, Einsetzen von Gleit- statt Wälzlagern oder umgekehrt. Diese Problemlösungsansätze verursachen hohe Kosten und führen zu außerplanmäßigen Umrüstzeiten, die zu einem Produktionsausfall auf Kundenseite führen.

Der Erfindung liegt die Aufgabe zugrunde, die typischen Systemeigenfrequenzen von Maschine und Fundament vor Ort schnell und einfach verändern zu können.

Die Lösung der gestellten Aufgabe gelingt erfindungsgemäß dadurch, daß das Lagerschild mindestens zwei unterschiedlich ausgeführte Sektoren aufweist. Unter einem Sektor wird sowohl ein Kreisausschnitt als auch ein willkürlicher Bereich des Lagerschildes verstanden. Durch eine derartige Unterteilung des Lagerschildes in mindestens zwei unterschiedlich ausgeführte Sektoren werden unterschiedliche radiale Steifigkeiten in den einzelnen Sektoren erreicht. Durch Verdrehen der Lagerschilde in einer zu der Motorachse senkrechten Ebene, können Motoren anderer Steifigkeit, und somit auch anderer Eigenfrequenzen gewonnen werden. Mehr als zwei unterschiedlich ausgeführte Sektoren ermöglichen eine stufenweise Einstellbarkeit der Eigenfrequenzen der Motoren. Das Drehen der Lagerschilde kann ohne großen Aufwand vor Ort erfolgen. Es tritt somit eine wesentliche Kostenreduktion und eine Minimierung der Umrüstzeiten ein. Die Anzahl der Sektoren ist sinnvollerweise nach oben durch die Anzahl der Befestigungsschrauben am Umfang des Lagerschildes am Motorgehäuse begrenzt. Ist eine weitere Unterteilung vorgesehen, so müssen die Sektoren an ihren Übergangszonen derart miteinander verbunden sein, so daß sie den betrieblichen Belastungen standhalten.

Der unterschiedliche Aufbau zeigt sich gemäß den Unteransprüchen sowohl im Material und der Materialdicke, als auch in der gestalterischen Ausführung dieser Sektoren. Ausführungsbeispiele der Erfindung werden anhand einer Zeichnung näher erläutert. Es zeigen:
- FIG 1: ein Lagerschild mit zwei Sektoren unterschied licher Materialdicke in Draufsicht
- FIG 2: in Seitenansicht
- FIG 3: ein Lagerschild mit Schlitzausführung eines der beiden Sektoren.

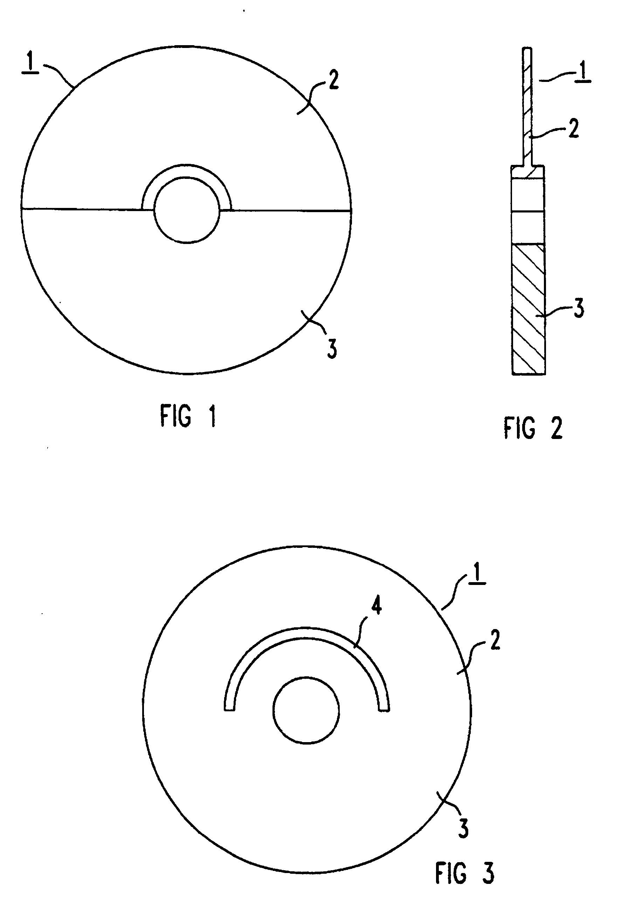

FIG 1 zeigt ein Lagerschild 1 mit zwei Sektoren 2, 3 mit unterschiedlicher Materialdicke. Dadurch weisen beide Sektoren 2, 3 eine unterschiedliche Steifigkeit auf, wie sie sich auch durch einen in FIG 3 dargestelltes Lagerschild 1 mit koaxialer Schlitzausführung 4 eines der beiden dargestellten Sektoren 2, 3 einstellt. Der Schlitz kann mit weicher Dichtmasse ausgefüllt werden. Dadurch wird bei unveränderter Steifigkeit des Sektors das Eindringen von Schmutzpartikeln in den Motorinnenraum verhindert.

Bei Schwingungsproblemen der Motoren vor Ort werden diese Lagerschilde 1 um 180° in einer Ebene senkrecht zur Motorachse gedreht. Damit werden die Systemeigenfrequenzen von Maschine und Fundament in Frequenzbereiche verschoben, die durch Drehzahl der Maschine und elektrische Anregung nicht mehr angeregt werden.

## Patentansprüche

1. Lagerschild (1), insbesondere für elektrische Maschinen, **dadurch gekennzeichnet**, daß das Lagerschild (1) mindestens zwei unterschiedlich ausgeführte Sektoren (2, 3) aufweist, derart, daß durch Verdrehen des Lagerschildes in einer zur Maschinenachse senkrechten Ebene die Systemeigenfrequenz von Maschine und Fundament vor Ort veränderbar ist.

2. Lagerschild (1) nach Anspruch 1, **dadurch gekennzeichnet,**daß die Sektoren (2, 3) unterschiedliche Materialien aufweisen.

3. Lagerschild (1) nach Anspruch 1 oder 2, **dadurch gekennzeichnet**, daß die Sektoren (2, 3) unterschiedliche Materialdicken aufweisen.

4. Lagerschild (1) nach Anspruch 3, **dadurch gekennzeichnet,**daß der Übergang zwischen den Sektoren (2, 3) unterschiedlicher Materialdicke fließend oder abrupt ist.

5. Lagerschild (1) nach Anspruch 1, **dadurch gekennzeichnet,**daß die Sektoren (2, 3) durchgängige und/oder sacklochartige Vertiefungen (4) aufweisen.

6. Lagerschild nach Anspruch 5 ,**dadurch gekennzeichnet,**daß diese Vertiefungen als Schlitze (4) in koaxialer und/oder im wesentlichen in radialer Richtung ausgeführt sind.

## Claims

1. An end shield (1), particularly for electrical machines, characterised in that the end shield (1) has at least two differently designed sectors (2, 3) in such a way that the natural system frequency of the machine and foundation can be varied on site by rotating the end shield in a plane perpendicular to the machine axis.

2. The end shield (1) in accordance with claim 1, characterised in that the sectors (2, 3) are of different materials.

3. The end shield (1) in accordance with claim 1 or 2, characterised in that the sectors (2, 3) have different material thicknesses.

4. The end shield (1) in accordance with claim 3, characterised in that the transition between the sectors (2, 3) of different material thickness is continuous or abrupt.

5. The end shield (1) in accordance with claim 1, characterised in that the sectors (2, 3) have continuous and/or dead-end depressions (4).

6. The end shield in accordance with claim 5, characterised in that these depressions are designed as slots (4) in the coaxial and/or substantially in the radial direction.

## Revendications

1. Flasque (1), notamment pour machines électriques, caractérisé en ce que le flasque (1) comporte au moins deux secteurs (2, 3) réalisés différemment, de telle manière que, en tournant le flasque dans un plan perpendiculaire à l'axe de la machine, la fréquence propre du système de la machine et de la fondation peut être modifiée sur place.

2. Flasque (1) suivant la revendication 1, caractérisé en ce que les secteurs (2, 3) comportent des matériaux différents.

3. Flasque (1) suivant la revendication 1 ou 2, caractérisé en ce que les secteurs (2, 3) ont des épaisseurs de matériau différentes.

4. Flasque (1) suivant la revendication 3, caractérisé en ce que la transition entre les secteurs (2, 3) d'épaisseurs de matériau différentes est douce ou abrupte.

5. Flasque (1) suivant la revendication 1, caractérisé en ce que les secteurs (2, 3) comportent des évidements (4) traversants et/ou du genre de trous borgnes.

6. Flasque (1) suivant la revendication 5, caractérisé en ce que ces évidements sont réalisés en entailles (4) dans la direction coaxiale et/ou sensiblement dans la direction radiale.
